# EUROPEAN PATENT SPECIFICATION

(11) **EP 3 460 938 B1**
(45) Date of publication and mention of the grant of the patent: **01.07.2020**
(21) Application number: 17798643.7
(22) Date of filing: 05.05.2017
(51) Int. Cl.: H02H 9/08, H02H 3/04, H01C 7/10, H01C 7/12

(54) **ARC-PREVENTING FAST-BREAKING SURGE PROTECTION APPARATUS**
LICHTBOGENVERHINDERNDE SCHNELL BRECHENDE ÜBERSPANNUNGSSCHUTZVORRICHTUNG
APPAREIL DE PROTECTION CONTRE LES SURTENSIONS À COUPURE RAPIDE EMPÊCHANT L'ARC

(30) Priority: 17.05.2016 CN 201610325191
(43) Date of publication of application: 27.03.2019
(73) Proprietor: Guangxi NQT Electronic Technology Co., Ltd, Nanning City, Guangxi 530022 (CN)
(72) Inventor: WANG, Zhan, Nanning City, Guangxi 530022 (CN); PAN, Yuanli, Nanning City, Guangxi 530022 (CN); HUANG, Xingying, Nanning City, Guangxi 530022 (CN); FENG, Moxiao, Nanning City, Guangxi 530022 (CN); LIANG, Qingjie, Nanning City, Guangxi 530022 (CN); HUANG, Shouning, Nanning City, Guangxi 530022 (CN)
(74) Representative: Hannke, Christian
(86) International application number: PCT/CN2017/083295
(87) International publication number: WO 2017/198080

(56) References cited:
- EP-B1- 2 284 857
- EP-B1- 2 609 601
- CN-A- 101 261 893
- CN-A- 101 741 081
- CN-A- 104 505 319
- CN-A- 106 026 067
- CN-A- 106 026 067
- CN-U- 203 761 042
- DE-A1- 4 241 311
- DE-B3-102007 006 617
- US-A1- 2009 079 535
- US-B1- 6 430 019

## Description

### FILELD OF THE INVENTION

The present invention relates to a circuit protection device, in particular to a surge protection device having functions of arc-preventing and fast-breaking under a short circuit and overloading current.

### BACKGROUND OF THE INVENTION

Surge protectors or surge suppressors, also known as surge protection device, provide protection against overvoltage for electronic components of various sensitive or expensive electronic devices, such as computers and communication-related equipment. The existing surge protection devices are usually designed for surge overvoltage protection under medium or general conditions, so when the surge overvoltage energy is small or lasting time is short, the surge protection device cannot be rapidly responsive. As a result, voltage-sensitive protection components (such as piezoresistors) are usually directly applied to electronic circuits to protect the electronic circuit. Conventional varistors are electronic devices consisting of zinc oxide particles and complex intracrystalline particles, which are voltage nonlinear devices and ideal protection devices for sensitive electronic circuits due to the unique voltage and current characteristics. However, due to the material composition, it is determined that it is extremely vulnerable to breaking down and igniting during overvoltage and short circuit and overloading, thus causing catastrophic damage to nearby sensitive electronic circuits and components. Therefore, it needs a safer and more sensitive surge protection device that can be used in the protection of surge over-voltage, short-circuit and overloading for high-precision control circuits such as communication devices, computers, televisions, air conditioners, etc. For example, a transient peak current or an overvoltage is generated in electronic circuits because of the extra electromagnetic interference, the surge protection device can instantaneously conduct, absorb and discharge the surge voltage to protect the electronic devices, and can rapidly separate the surge protection device when the surge device is damaged by short circuit and overloading, thus avoiding fire and catastrophic damage to electronic devices.

The surge protectors or surge suppressors are now available.

For example, EP2609601A2 discloses a transient voltage surge suppression device which includes a varistor assembly having a compact thickness, and thermal disconnect assembly carrying a separable contact bridge movable along a linear axis to disconnect the varistor element from external circuitry.

For example, DE4241311A1 discloses a monitoring and safety module, which uses a varistor element that responds to temperature changes to release a spring loaded contact system when a predetermined temperature is reached, wherein the varistor has contact terminals coupled to the system being monitored and a projecting contact is soldered to an element that holds a loaded spring under tension, when the applied voltage is such that the varistor temperature is sufficiently high, the solder melts and the stored energy is released to operate an alarm stage.

So far, the existing surge protectors or surge suppressors with arc extinguishing function generally adopts method shielding and cutting off arc to extinguish arc.

For example, EP2284857A2 discloses an element has a connecting element in electrically contact with a terminal contact and a pole of a varistor via a thermally separating connection, wherein the connection is separated when the temperature of the component exceeds a preset boundary temperature, a spring system exerts a force that causes the connecting element to move out of electrically contact with the terminal contact and the pole, and the electrically conductive connecting element is connected to the insulating disconnecting element such that, with the thermal connection separated, the insulating disconnecting element is moved between the second terminal contact and the second pole of the overvoltage limiting component.

For example, US2009/079535A1 discloses a varistor, which comprises a main body having first and second external terminals formed on the outer surface thereof, a first withdrawn terminal plate joined to the first external terminal, and a second withdrawn terminal plate joined to the second external terminal, wherein the melting point of a second bonding material for allowing the second withdrawn terminal plate and the second external terminal to be joined to each other is lower than that of a first bonding material for allowing the first withdrawn terminal plate and the first external terminal to be joined to each other.

For example, DE102007006617B3 discloses an overvoltage protection element has a housing, with two overvoltage-limiting component arranged in the housing, particularly two varistors or two varistor disks, wherein two parting agents are provided, where every parting agent has a spring-loaded slide valve made of non conductive material and a spring element, a control rod is shifted to a distance, even if a slide valve is passed from a position to another position.

For example, Chinese Patent No. 200810088691 discloses a thermal protection piezoresistor module and Chinese patent No. 201420145977.8 discloses a surge suppressor with arc extinguishing function, in which shielding and cutting off the arc is applied for thermally separating the switching electrode of the response switch assembly. In this method, the arc shielding mechanism needs a stroke to reach the position to shield and cut off the arc, and then the arcing shielding mechanism cannot enter the gap of the switch electrode to cut off the arc at the moment of switch separating. Therefore, the piezoresistor under the conditions will be instantaneously overloaded, overheat, thus finally causing fire and explosion. Such catastrophic damage will burn nearby sensitive electronic devices and components, leading the entire electronic system to collapse and damage.

### BRIEF SUMMARY OF THE INVENTION

The object of the present invention is to overcome the defects and deficiencies of the existing surge protection device in situation of overvoltage leading to shout circuit and overload of the device, and provide a novel fast response surge protection device, which can effectively prevent arc generation and separate the surge protection device under shout circuit and overload, thus fire hazard can be fundamentally eliminated to ensure the safety of the electronic device.

In order to achieve the above purposes, the invention is realized through the following technical solutions.

The present invention as defined in the appended claims provides an arc-preventing fast-breaking surge protection device, wherein the device comprises an arc-preventing assembly, a voltage sensitive assembly, electrode pins, a response switch assembly and a housing consisted of an inner shell and an outer cover. The arc-preventing assembly comprises an arc-preventing catapult and an elastic element; the voltage sensitive assembly comprises at least one voltage sensitive element; the electrode pins comprising a flexible conductor, a first electrode pin and a second electrode pin; the response switch assembly comprises a thermosensitive element, a front electrode and a tripping electrode, the tripping electrode being consist of a movable electrode slice, a electrode welding end and a breaking section, the breaking section being respectively electrically connected the movable electrode slice and the electrode welding end.

A first cavity and a second cavity are formed when the inner shall is engaged with the outer cover, and the arc-preventing assembly and the response switch assembly is arranged in the first cavity. The voltage sensitive element is consisted of sensitive components such as varistor sensitive component, discharge tubular sensitive component or discharge gap sensitive component, which is arranged in the second cavity. Two metal electrode slice are respectively disposed on both sides of the voltage sensitive element, and the front electrode is disposed on one of the metal electrode slices, the front electrode protrudes from the second cavity to the first cavity, the front electrode is provided with a slotted hole out of which the electrode welding end extends; the other metal electrode sheet is provided with a back electrode, the back electrode is in the second cavity

A front end of the arc-preventing catapult is provided with a through hole out of which the electrode welding end protrudes; when the arc-preventing catapult contacts with the front electrode in the first cavity, the through hole faces the position of the slotted hole to ensure the electrode welding end protrudes to simultaneously pass through the through hole and the slotted hole.

The breaking section is a metal alloy material which is vaporized instantaneously after melting, when an instantaneous surge overvoltage, an overcurrent, a short circuit current or an overload current through the tripping electrode exceeds a preset melting temperature, the breaking section of the tripping electrode instantaneously melts and vaporizes so that movable electrode slice separates from the electrode welding end, thus realizing fast breaking function of the surge protection device under a short circuit and an overload.

The arc-preventing catapult is provided with an exhaust vent, when the tripping electrode is disposed in the arc-preventing catapult, the breaking section faces the position of the exhaust vent when the electrode welding end protrudes from the through hole, to ensure that the generated explosive gas wave can be discharged through the exhaust vent when the breaking section is melted and vaporized under the short circuit current or the overload current, and meanwhile, the effect of instantaneously stretching and blowing off the arc can be achieved by taking advantage of the gas wave.

The thermosensitive element is a fusible metal alloy solder, of which a temperature threshold for melting can be preset, and the thermosensitive element will melt rapidly when the preset temperature threshold is reached

In one preferred embodiment of the present invention, the arc-preventing fast-breaking surge protection device further comprises an indication module and a remote signaling alarm module for indicating a working state thereof. The indication module is an electrical indicating device, for example, a light emitting diode; or a mechanical indication module. The outer cover is provided with an indication window or indicating a working state of the surge protection device, then the surge protection device has functions of indicating a working state and sending remote signaling alarm. When applying the surge protection device in power system, the tripping electrode is concealed in the arc-preventing catapult, and the electrode welding end protrudes out of the through hole and the slotted hole, which is electrically connected with the front electrode through the thermosensitive element. The first cavity is provided with an inserting groove, and the second cavity is provided with a blocking groove; the first electrode pin enters the first cavity through the inserting groove, and the second electrode pin enters the second cavity through the blocking groove; two ends of the flexible conductor are respectively electrically connected to the movable electrode slice and an inner end of the first electrode pin by metal alloy soldering or spot welding, the back electrode is electrically connected to an inner end of the first electrode pin by metal alloy soldering; an outer end of the first electrode pin and an outer end of the second electrode pin catapult outside the inner shells to form external connection pins. As a result a normally closed working state. Therefore, the response switch assembly and the voltage sensitive assembly are connected in series to form a normally closed working state, and the switch of the remote signaling device is not subjected to external stress under the normal working state of the surge protection device.

Furthermore, with regards to the functions of preventing arc generation and fast breaking under shout circuit and overload, technical explanation will be discussed below.

The elastic element is consisted of a first elastic member and a second elastic member, and the first elastic member is disposed on the arc-preventing catapult, by which the movable electrode slice is misalighed; a second elastic member is disposed in the first cavity, by which the arc-preventing catapult is misalighed. When temperature of the voltage sensitive element is increased due to the short circuit current or the overloading current through circuits and the leakage current because of the aging of the voltage sensitive element, the generated heat is transmitted to the front electrode, thus enabling the thermosensitive element to melt when reaching a preset temperature threshold. The movable electrode slice is rapidly catapulted in the arc-preventing catapult due to an elastic stress of the first elastic member before the electrical arc generates; the arc-preventing catapult is rapidly catapulted in a direction away from the front electrode due to an elastic stress of the second compression spring. The molten thermosensitive element on the electrode welding end is scraped off by the through hole, a sufficiently large dielectric strength is formed between the through hole and the electrode welding end and between the front electrode and electrode welding end, and the tripping electrode and the front electrode are completely isolated from each other.

In another case, when the instantaneous surge overvoltage, overcurrent, short circuit or overload current through the tripping electrode exceeds a preset threshold value, the breaking section of the tripping electrode instantaneously melts and vaporizes so that movable electrode slice separates from the electrode welding end. Simultaneously The movable electrode slice is simultaneously catapulted in a direction away from the electrode welding end due to an elastic stress of the first elastic member and the second elastic member, the arc-preventing catapult is catapulted in a direction away from the front electrode due to an elastic stresses of the second elastic member, wherein the movable electrode slice is concealed in the arc-preventing catapult. As a result, A sufficiently large dielectric strength is formed between the electrode welding end and the movable electrode slice, completely avoiding the arc generated during separation of the movable electrode slice to form an electrical breakdown; in addition, the generated explosive gas wave can be discharged through the exhaust vent in the position of the breaking section and meanwhile, the effect of instantaneously stretching and blowing off the arc can be achieved by taking advantage of the gas wave.

According the above discussion, the working state of the response switch assembly is changed from normally closed to normally open. During the process, the indication module of the surge protection device is moved, the change from the indication window relative to the normal working state can be observed (for example, changing into a red display). Meanwhile the switch of the remote signaling alarm module is subjected to external stress, which causes the switch state to change, thereby sending an electrical signal for indicating protection invalidation of the surge protection device.

The elastic stress of the first elastic member is usually preset to be larger than that of the second elastic member to ensure that the electrode welding end of the tripping electrode can be rapidly catapulted and kept concealed in the arc-preventing catapult at the detachment moment of the tripping electrode of the response switch assembly, thus sufficient insulation strength between the through hole and the tripping electrode will be kept.

Compared with the prior art, the advantages of the present invention is as follows:

The arc-preventing fast-breaking surge protection device of the invention has the protection functions of catapulting and breaking under situations of transient temperature rising (such as the leakage current generated by the aging of its own life), the transient over-voltage, the transient short-circuit and the transient overload. When the catapulting and separating occur as transient temperature rises, the tripping electrode of the response switch assembly can be concealed; or when the catapulting and separating occur during the transient over-voltage, the transient short-circuit and the transient overload short circuit and overloading, the generated explosive gas wave during breaking of the tripping electrode can be stretched and further blow off the arc. Regardless of the breaking modes, the protection device can instantaneously realize breaking and concealing the tripping electrode, and an effective dielectric strength is formed before the arc is generated, completely preventing arc generation, which is not available in the exiting surge protection device.

### BRIEF DESCRIPTION OF THE DRAWINGS

Fig. 1 is a disassembly diagram of an arc-preventing fast-breaking surge protection device according to Embodiment 1 of the present invention;
Fig. 2 is a back structure diagram of an inner shell according to Embodiment 1 of the present invention;
Fig. 3 is a cross-sectional view of a surge protection device in normal working state according to Embodiment 1 of the present invention;
Fig. 4 is a cross-sectional view of a surge protection device after a thermal trip and breakdown according to Embodiment 1 of the present invention;
Fig. 5 is a cross-sectional view of a surge protection device after current is cut off according to Embodiment 1 of the present invention;
Fig. 6 is a combined structure diagram of an arc-preventing catapult and a tripping electrode according to Embodiment 2 of the present invention;
Fig. 7 is a cross-sectional view of a surge protection device in normal working state according to Embodiment 2 of the present invention;
Fig. 8 is a cross-sectional view of a surge protection device after a thermal trip and breakdown according to Embodiment 2 the present invention;
Fig. 9 is a cross-sectional view of a surge protection device after current is cut off according to Embodiment 2 of the present invention;
Fig. 10 is a cross-sectional view of a surge protection device in normal working state according to Embodiment 3 of the present invention;
Fig. 11 is a cross-sectional view of a surge protection device after a thermal trip and breakdown according to Embodiment 3 the present invention;
Fig. 12 is a cross-sectional view of a surge protection device after current is cut off according to Embodiment 3 of the present invention;
Fig. 13 is a combined structure diagram of an arc-preventing catapult and a tripping electrode according to Embodiment 4 of the present invention;
Fig. 14 is a cross-sectional view of a surge protection device in normal working state according to Embodiment 4 of the present invention;
Fig. 15 is a cross-sectional view of a surge protection device after a thermal trip and breakdown according to Embodiment 4 the present invention;
Fig. 16 is a cross-sectional view of a surge protection device after current is cut off according to Embodiment 4 of the present invention;
Figure 17 is a view showing a special structure of a tripping electrode according to the present invention.

Parts corresponding to reference numeral: 1- inner shell; 1a- first cavity; 1b- second cavity; 1c-first end; Id-second end; 11-electrode hole; 12-recess; 13-guide rail; 14-inserting groove; 15-blocking groove; 16-remote signaling gap; 17-stop block; 18-electrode baffle; 2-outer cover; 2a-indication window; 3-elastic element; 3a- first elastic member; 3b- second elastic member; 4-arc-preventing catapult; 4a-through hole; 4b-exhaust vent; 41-wing arm; 42-spring groove; 43-sliding groove; 5-voltage sensitive element; 51-front electrode; 5la-slotted hole; 52-back electrode; 6-tripping electrode; 6a-movable electrode slice; 6b-electrode welding end; 6c-breaking section; 7-flexible conductor; 8-first electrode pin; 9-second electrode pin; 8a-outer end of the first electrode pin; 8b-inner end of the first electrode pin; 9a-outer end of the second electrode pin; 9b-inner end of the second electrode pin; 10-indication module; 20-remote signaling alarm; 20a-alarm pin; 30-thermosensitive element.

### DETAILED DESCRIPTION OF ILLUSTRATED EMBODIMENTS

The present invention will be further described in detail below with reference to the accompanying drawings and specific embodiments. However, the scope of the present invention is not limited to the following preferred embodiments, and the technical solution for enhancing the arc-breaking and insulation effect by catapulting and concealing tripping electrode in accordance with the present disclosure is within the protection scope thereof; the surge protection device of the present invention does not limit the material types of the voltage sensitive element, the elastic element, the first elastic member, the second elastic member and the flexible conductor; in the following specific embodiments, as is taken as examples to describe in detail the structure of the surge protection device of the present invention, the elastic element 3 is compression springs 3, the first elastic member 3a is first compression springs 3a, the second elastic member 3b is second compression springs 3b, the voltage sensitive element 5 is a varistor 5, and the flexible conductor 7 is a flexible copper wire 7.

### Embodiment 1

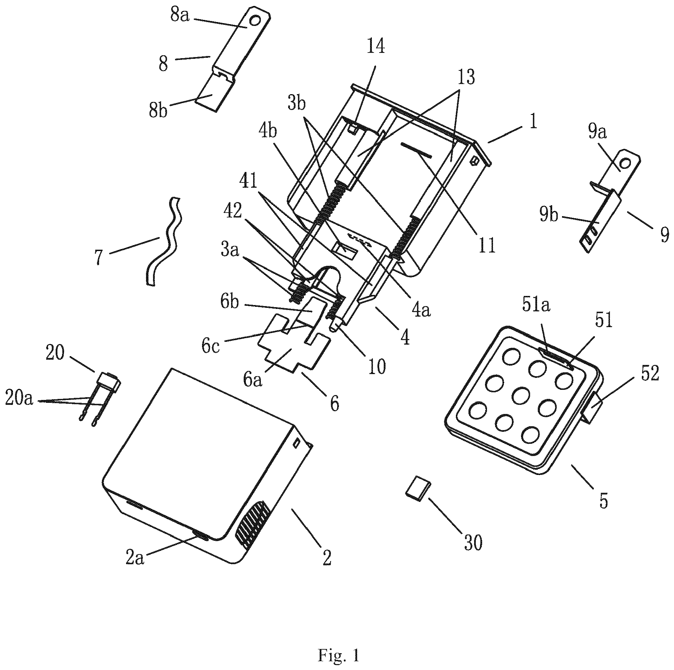

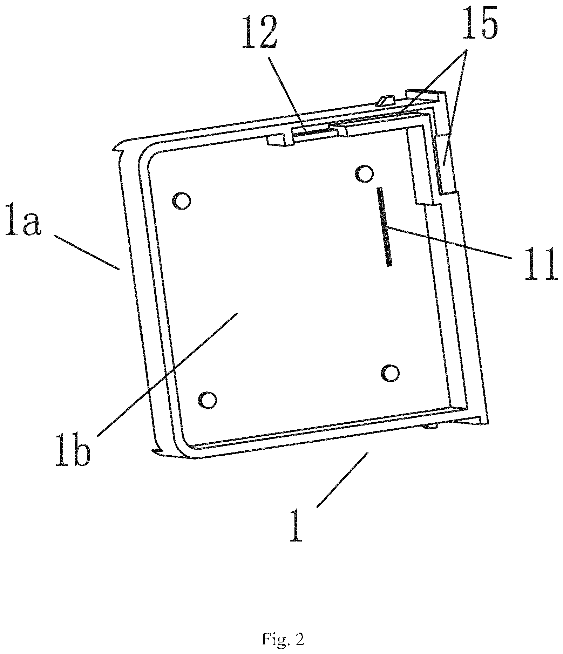

Referring now to Fig. 1 and Fig. 2, an arc-preventing fast-breaking surge protection device comprises an inner shell 1, an outer cover 2, two first compression springs 3a, two second compression springs 3b, an arc-preventing catapult 4, a varistor 5, a flexible copper wire 7, a first electrode pin 8, a second electrode pin 9, an indication module 10, a remote signaling alarm module 20 and a tripping electrode 6; the tripping electrode 6 is consist of a movable electrode slice 6a, a electrode welding end 6b and a breaking section 6c, and the movable electrode slice 6a is electrically connected with the electrode welding end 6b through the breaking section 6c. Both of the back silver electrode and the front silver electrode of the varistor 5 are provided with metal electrode slices by way of soldering, wherein one metal electrode slice is provided with a front electrode 51, a slotted hole 51a out of which the electrode welding end 6b protrudes is formed on the front electrode 51; a back electrode 52 is formed by an extending bending portion of the other metal electrode slice. The inner shell 1 has a frame structure. When the inner shell 1 and the outer cover 2 are engaged by a buckle, a first cavity 1a formed on the front surface of the inner shell 1, and a second cavity 1b is formed on the back surface of the inner shell 1. When the varistor 5 is placed in the second cavity 1a, the front electrode 51 protrudes into the first cavity 1a through the electrode hole 11 that penetrates the first cavity 1a and the second cavity 1b, as such, the slotted hole 51a is also located in the first cavity 1a; the back electrode 52 extends into the recess 12 on one side of the second cavity 1b. Two guide rails 13 perpendicular to the bottom of the inner shell 1 are disposed on both sides of the electrode hole 11 of the first cavity 1a, and the elongated slot openings of the two guide rails 13 are opposed to each other. An inserting groove 14 penetrating the bottom of the inner shell 1 is provided on the bottom of the side of the first cavity 1 farthest from the recess 12, a blocking groove 15 with L-shape structure and penetrating the bottom of the inner shell 1 is disposed on the side of the second cavity 1b closest to the recess 12, and the inner end of the blocking groove is communicated with the recess 12.

The arc-preventing catapult 4 with a box-like structure forms a cavity, and a spring groove 42 is provided on each side of the cavity. The front wall of the arc-preventing catapult 4 is provided with a through hole 42 out of which the electrode welding end 6b protrudes, and a wing arm 41 capable of being inserted into the guide rail 13 is provided on each side of the arc-preventing catapult 4. When the front electrode 51 protrudes out of the electrode hole 11, the arc-preventing catapult 4 slides along the guide rails 13 with the wing arm 41 of each side of the arc-preventing catapult 4 until touching the front electrode 51, as such, the positions of the through hole 4a and the slotted hole 51a face each other. The arc-preventing catapult 4 is further provided with an exhaust vent 4b. When the tripping electrode 6 is concealed in the cavity of the arc-preventing catapult 4 and the electrode welding end 6b protrudes out of the through hole 4a, the breaking section 6c faces the exhaust vent 4b.

In the present embodiment, the indication module 10 is a knockout pin which is disposed at the end of the arc-preventing catapult 4 and integral with the arc-preventing catapult 4. An indication window 2a is arranged in a corresponding position of the outer cover 2, out of which the indication module 10 may extends. The remote signaling alarm module 20 is an independent switch.

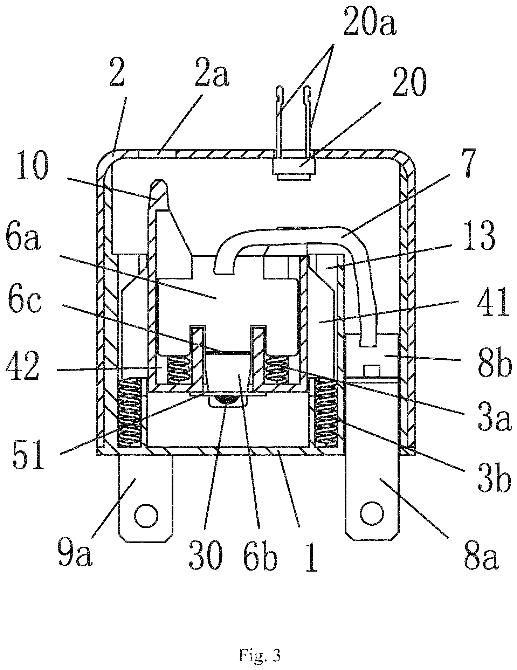

As shown in Fig. 3, the remote signaling alarm module 20 is disposed in the outer cover 2, of which an alarm pin 20a extends out of the outer cover 2. The two second compression springs 3b are respectively arranged in the two guide rails 13, and the arc-preventing catapult 4 is inserted into the guide rails 41 through the side wing arms 41 until touching the front electrode 51, and the two second compression springs 3b are in compressed state. The two first compression springs 3a are respectively arranged in the two spring grooves 42, and the tripping electrode 6 inserted into the arc-preventing catapult 4 until the electrode welding end 6b protrudes out of the through hole 4a and the slotted hole 51a, and the movable electrode slice 6a compresses the two first compression spring 3a to be in compressed state. As such, the elastic stress of the first compression springs 3a is greater than the elastic stress of the second compression springs 3b. The electrode welding end 6b is electrically connected to the front electrode 51 through a thermosensitive element 30 by way of soldering; the first electrode pin 8 and the second electrode pin 9 are respectively fixed to the inner shell 1 through the inserting groove 14 and the blocking groove 15, and an outer end 8a of the first electrode pin 8 and an outer end 9a of the second electrode pin 9 extends outside the inner shell 1 to form external connection pins, and two ends of the flexible copper wire 7 are respectively electrically connected to the movable electrode slice 6a and an inner end 8b of the first electrode pin by metal alloy soldering or spot welding; the back electrode 52 is electrically connected to an inner end 9b of the first electrode pin 9 by metal alloy soldering, so that these electric conductors are connected in series with the varistor 5 to form a normally closed switch. When the surge protection device is employed in the power system, the two external connection pins are respectively connected to the phase line and the neutral line or the ground line. As such, the indication module 10 is located in the indication window 2a, and the switch of the remote signaling alarm module 20 is free from the compression of the external stress under the normal working state of the surge protection device.

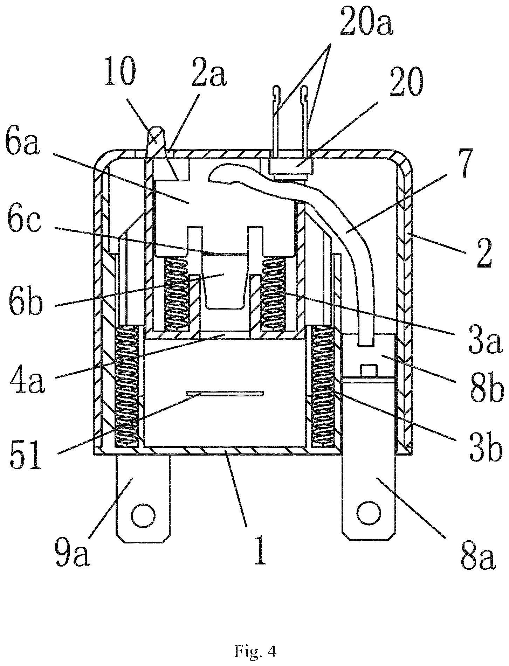

According to an embodiment of the present invention, when temperature of the varistor 5 is increased due to a short circuit current, an overloading current through circuits or a leakage current because of the aging thereof, the generated heat is transmitted to the front electrode 51, thus enabling the thermosensitive element 30 to melt when reaching a preset temperature threshold. As shown in Fig. 4, the electrode welding end 6b is rapidly catapulted in the arc-preventing catapult 4 due to elastic stresses of the two first compression springs 3a on the movable electrode slice 6a; simultaneously the arc-preventing catapult 4 is rapidly catapulted in a direction away from the front electrode 51 due to elastic stresses of the two second compression springs 3b. Finally, the indication module 10 extends out of the indication window 2a, and the switch of the remote signaling alarm module 20 is compressed to be stationary by ends of the movable electrode slice 6a and the arc-preventing catapult 4, thereby causing its switch state to change. As Such, a mechanical indication for invalidation is realized, meanwhile a remote signal for indicating fault of the surge protection device is sent out. A sufficiently large dielectric strength is formed between the electrode welding end 6b and the front electrode 51, and the tripping electrode 6 and the front electrode 51 are completely isolated from each other.

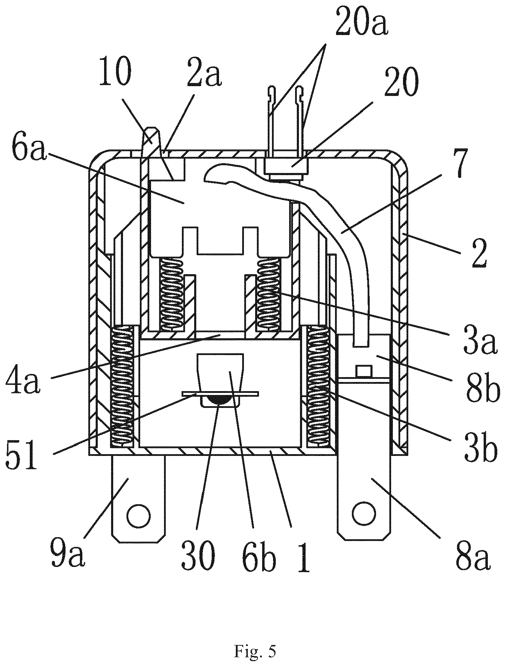

According to another embodiment of the present invention, when an instantaneous surge overvoltage, an overcurrent, a short circuit current or an overload current through the tripping electrode 6 exceeds a preset threshold value, the breaking section 6c of the tripping electrode instantaneously melts and vaporizes so that movable electrode slice 6a separates from the electrode welding end 6b. Referring to Fig. 5, the movable electrode slice 6a and the arc-preventing catapult 4 are simultaneously catapulted in a direction away from the front electrode 51 due to the elastic stresses of the first compression springs 3a and the second first compression springs 3b. At last, the indication module 10 extends out of the indication window 2a, and the switch of the remote signaling alarm module 20 is compressed to be stationary by ends of the movable electrode slice 6a and the arc-preventing catapult 4, thereby causing its switch state to change. As Such, a mechanical indication for invalidation is realized, meanwhile a remote signal for indicating failure of the surge protection device is sent out. In this way, the electrode welding end 6b separates from the movable electrode slice 6a. A sufficiently large dielectric strength is formed between the electrode welding end 6b and the movable electrode slice 6a, and the movable electrode slice 6a and the front electrode 51 are completely isolated from each other.

### Embodiment 2:

Another embodiment of an arc-preventing fast-breaking surge protection device of the present invention is as follows. This embodiment has similar structure and usage as most of the components of Embodiment 1, the main differences of them lie in the catapulting mode of the arc-preventing assembly, the structure of the tripping electrode 6 and the remote signaling alarm module 20 missing in the surge protection device.

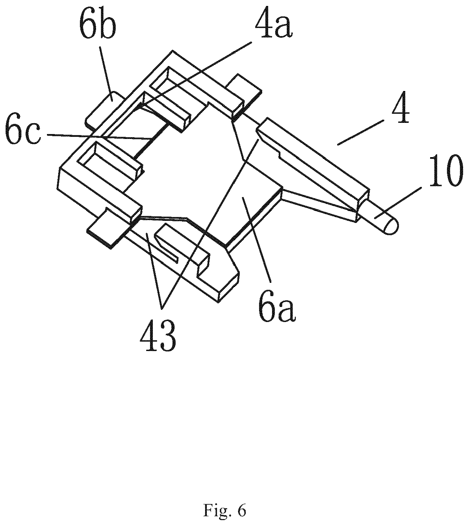

As shown in Fig. 6, the arc-preventing catapult 4 has a cavity structure with an open top, and a T-shaped sliding groove 43 is formed on each side wall of the arc-preventing catapult 4, and the extending portion of each side of the movable electrode slice 6a of the tripping electrode 6 passes through the sliding groove 43 and extends out of the arc-preventing catapult 4, and a front wall of the arc-preventing catapult 4 is provided with a through hole 4a out of which the electrode welding end 6b extends. When the extending portion of each side of the movable electrode slice 6a slides to a front end of the sliding groove 43, the electrode welding end 6b protrudes out of the arc-preventing catapult 4 through the through hole 4a, and he indication module 10 is a knockout pin which is disposed at the end of the arc-preventing catapult 4 and integral with the arc-preventing catapult 4.

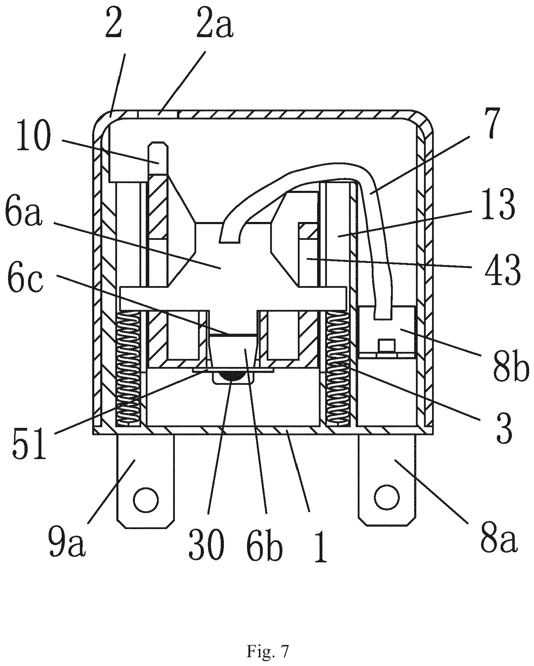

The structure shown in Fig. 6 is replaced with the corresponding structure in Fig. 3. As shown in Fig. 7, two compression springs 3 are respectively placed in the two guide rails 13, and the extending portion of each side of the movable electrode slice 6a is inserted into the guide rail 13 and drives the arc-preventing catapult 4 until toughing the front electrode 51. In this way, the electrode welding end 6b protrudes out of the through hole 4a and the slotted hole 51a, and the movable electrode slice 6a presses the two compression springs 3 to be in compressed state. The electrode welding end 6b is electrically connected to the front electrode 51 through a thermosensitive element 30 by way of soldering. When the surge protection device is employed in the power system, the two external connection pins are respectively connected to the phase line and the neutral line or the ground line. As such, the indication module 10 is compressed in the indication window 2a under the normal working state of the surge protection device.

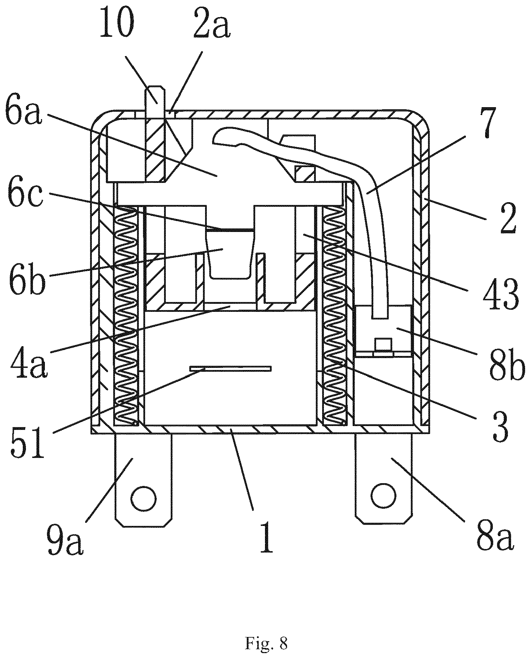

According to illustrative example of the present invention, when temperature of the varistor 5 is increased due to a short circuit current, an overloading current through circuits or a leakage current because of the aging of the varistor 5, the generated heat is transmitted to the front electrode 51, thus enabling the thermosensitive element 30 to melt when reaching a preset temperature threshold. As shown in Fig. 8, the electrode welding end 6b is rapidly catapulted in the through hole 4a due to elastic stresses of the compression springs 3 on the movable electrode slice 6a; the extending portion of each side of the movable electrode slice slides to end of the sliding groove 43 and drives the arc-preventing catapult 4 to continuously catapult in a direction away from the front electrode 51. At last, the indication module 10 extends out of the indication window 2a and is blocked to be stationary. As Such, a mechanical indication for invalidation is realized. A sufficiently large dielectric strength is formed between the electrode welding end 6b and the through hole 4a, the through hole 4a and the front electrode 51, and the tripping electrode 6 and the front electrode 6b are completely isolated from each other.

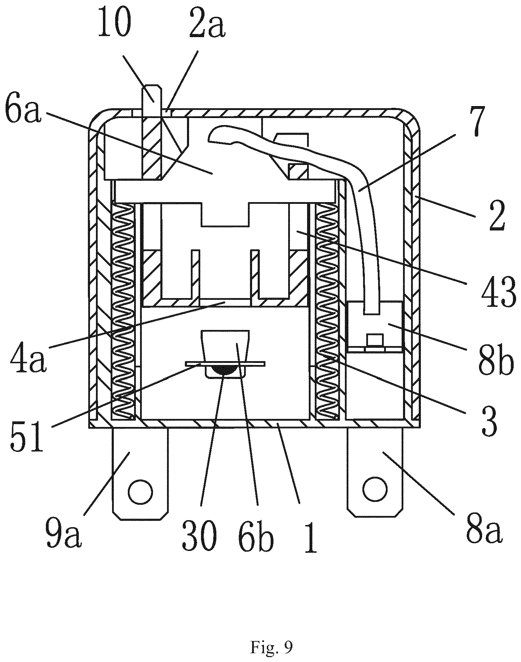

According to another embodiment of the present invention, when an instantaneous surge overvoltage, an overcurrent, or short circuit current or overload current through the tripping electrode 6 exceeds a preset threshold value, the breaking section 6c of the tripping electrode 6 instantaneously melts and vaporizes so that movable electrode slice 6a separates from the electrode welding end 6b. Referring to Fig. 9, the movable electrode slice 6a is catapulted in a direction away from the front electrode 51 due to the elastic stresses of the compression springs, and then the extending portion of each side of the movable electrode slice 6a slides to end of the sliding groove 43 and drives the arc-preventing catapult 4 to continuously catapult in a direction away from the front electrode 51. At last, the indication module 10 extends out of the indication window 1a and is blocked to be stationary. As Such, a mechanical indication for invalidation is realized. A sufficiently large dielectric strength is formed between the electrode welding end 6b and the through hole 4a, the through hole 4a and the movable electrode slice 6a, and the movable electrode slice 6a and the front electrode are completely isolated from each other.

### Embodiment 3

Another embodiment of an arc-preventing fast-breaking surge protection device of the present invention is as follows. This embodiment has similar structure and usage as most of the components of Embodiment 2, the main differences of them lie in the catapulting mode of the arc-preventing assembly and the indication module 10 and the indication window 1a missing in the surge protection device.

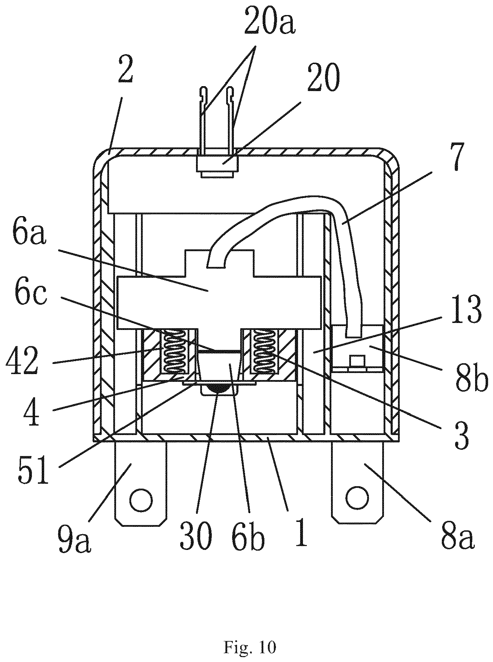

As shown in Fig. 10, the remote signaling alarm module 20 is disposed in the outer cover 2, of which an alarm pin 20a extends out of the outer cover 2. The arc-preventing catapult 4 is a baffle, which is vertically fixed under the electrode hole 11. The baffle is provided with a through hole 4a out of which the electrode welding end 6b protrudes, and a spring groove 42 is provided on each side of the through hole 4a. Two compression springs 3 are respectively arranged in the two spring grooves 42. The extending portion of each side of the movable electrode slice 6a is inserted into the guide rail 13 until the electrode welding end 6b protrudes out of the through hole 4a and the slotted hole 51a; the movable electrode piece 6a presses the two compression springs 3 to be in compressed state. The electrode welding end 6b is electrically connected to the front electrode 51 through a thermosensitive element 30 by way of soldering. When the surge protection device is employed in the power system, the two external connection pins are respectively connected to the phase line and the neutral line or the ground line. As such, the switch of the remote signaling alarm module 20 is free from the compression of the external stress under the normal working state of the surge protection device.

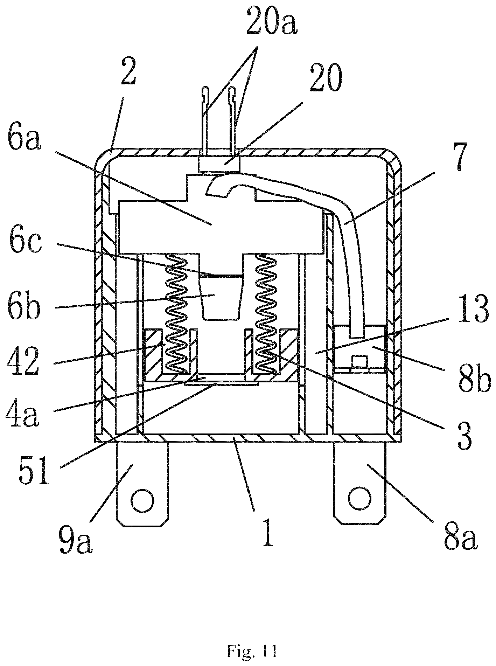

According to an embodiment of the present invention, when temperature of the varistor 5 is increased due to a short circuit current, an overloading current through circuits or a leakage current because of the aging of the varistor 5, the generated heat is transmitted to the front electrode 51, thus enabling the thermosensitive element 30 to melt when reaching a preset temperature threshold. As shown in Fig. 11, the electrode welding end 6b is rapidly catapulted in the through hole 4a by the movable electrode slice 6a due to an elastic stress of the compression springs 3 and catapulted continuously in a direction away from the front electrode 51. At last, the switch of the remote signaling alarm module 20 is compressed to be stationary by end of the movable electrode slice 6a, thereby causing its switch state to change, and then a remote signal for indicating fault of the surge protection device is sent out. A sufficiently large dielectric strength is formed between the electrode welding end 6b and the through hole 4a, and the tripping electrode 6 and the front electrode 51 are completely isolated from each other.

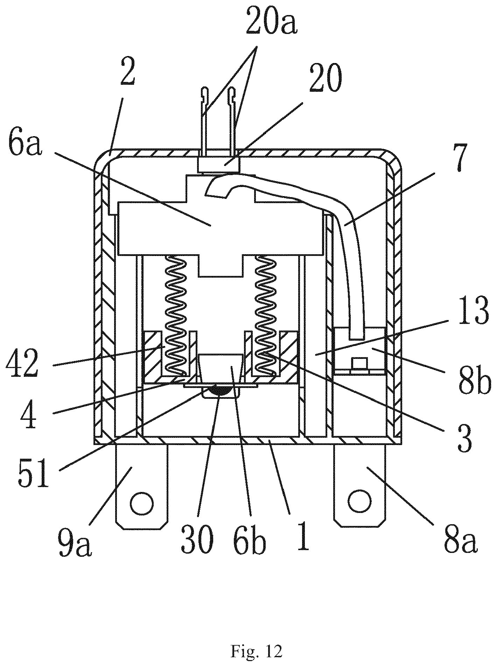

According to another embodiment of the present invention, when an instantaneous surge overvoltage, an overcurrent, a short circuit current or overload current through the tripping electrode 6 exceeds a preset threshold value, the breaking section 6c of the tripping electrode 6 instantaneously melts and vaporizes so that the movable electrode slice 6a separates from the electrode welding end 6b. Referring to Fig. 12, the movable electrode slice 6a is catapulted in a direction away from the front electrode 51 due to the elastic stresses of the compression springs 3, At last, the switch of the remote signaling alarm module 20 is compressed and blocked to be stationary by end of the movable electrode slice 6a, thereby causing its switch state to change,, then a remote signal for indication fault of the surge protection device is sent out. A sufficiently large dielectric strength is formed between the electrode welding end 6b and the movable electrode slice 6a, and the movable electrode slice 6a and the front electrode 51 are completely isolated from each other

### Embodiment 4:

Another embodiment of an arc-preventing fast-breaking surge protection device of the present invention is as follows. This embodiment has similar structure and usage as most of the components of Embodiment 1, the main differences of them lie in the structure of the tripping and the indicating modes for working state of the surge protection device.

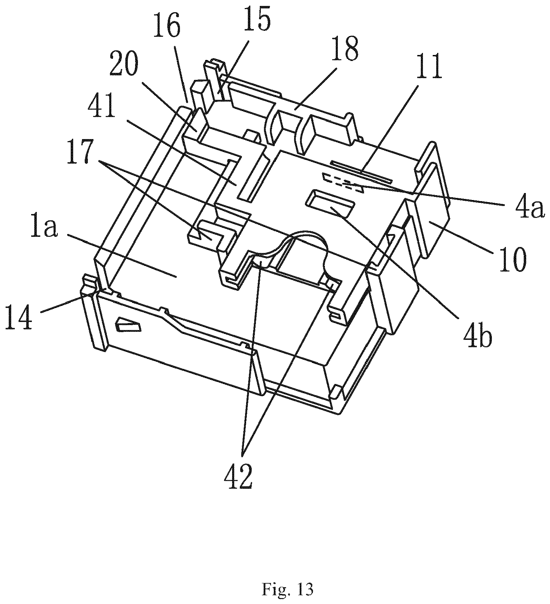

As shown in Fig. 13, the arc-preventing catapult 4 with a box-like structure forms a cavity, and a spring groove 42 is provided on each side of the cavity. The front wall of the arc-preventing catapult 4 is provided with a through hole 4a out of which electrode welding end protrudes 6b. The arc-preventing catapult 4 is further provided with an exhaust vent 4b. The indication module 10 with baffle structure is disposed on one side of the arc-preventing catapult 4, and the other side of the arc-preventing catapult 4 extends a wing arm 41 that can be provided with a spring. The remote signaling alarm module 20 is a bump disposed at the end of the wing arm 41. A remote signaling gap 16 is formed at the bottom of the first cavity 1a f the inner shell 1, and two stop blocks 17 and an electrode baffle 18 that can be provided with a spring are disposed on the first cavity 1a.

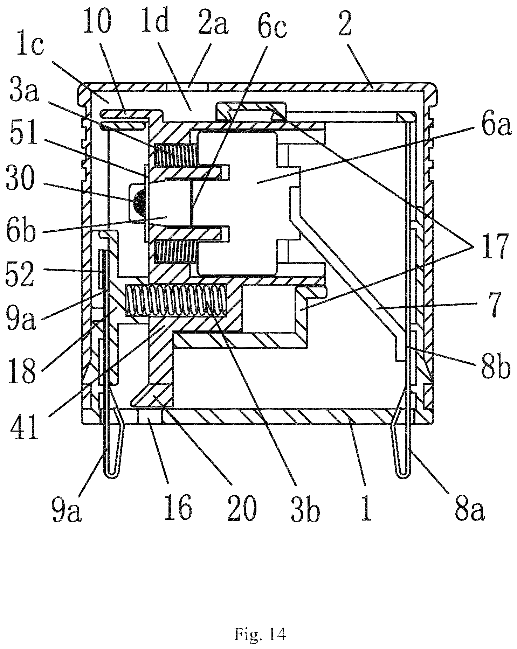

As shown in Fig. 14, two ends of a second compression spring 3b are respectively fixed on the electrode baffle 18 and the wing arm 41, and the arc-preventing catapult 4 is orientated by the stop blocks 17 until touching the front electrode. The second compression spring 3b is in compressed state. The two first compression springs 3a are respectively placed in the two spring grooves 4a, and the tripping electrode 6 is inserted into the arc-preventing catapult 4 until the electrode welding end 6b protrudes out of the through hole 4a and the slotted hole 51a. The movable electrode slices 6a compress the two first compression springs3a to be in compressed state. As such, the elastic stress of the first compression spring 3a is greater than the elastic stress of the second compression spring 3b. The electrode welding end 6b is electrically connected to the front electrode 51 through the thermosensitive element 30 by way of soldering. When the surge protection device is employed in the power system, the two external connection pins are respectively connected to the phase line and the neutral line or the ground line. As such, the remote signaling alarm module 20 blocks the remote signaling gap 16, and the indication module 10 is at the first end 1c of outer wall of inner shell 1. The indication window 2a faces the second end Id of outer wall of inner shell 1 under the normal working state of the surge protection device.

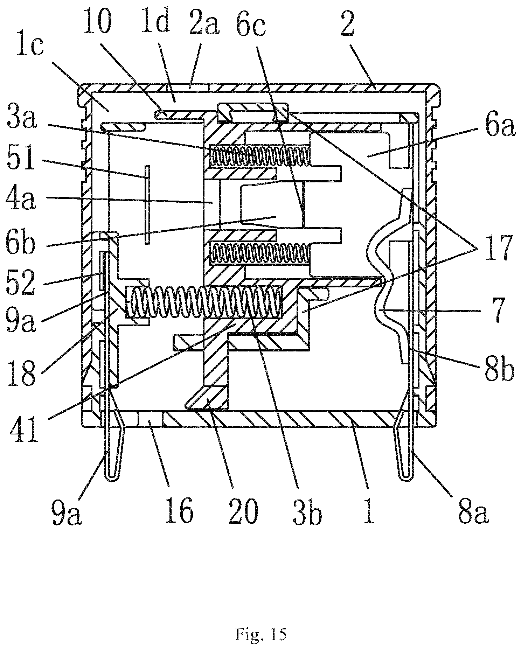

According to an embodiment of the present invention, when temperature of the varistor 5 is increased due to the short circuit and overloading current through circuits and the leakage current because of the aging thereof, the generated heat is transmitted to the front electrode 51, thus enabling the thermosensitive element 30 to melt when reaching a preset temperature threshold. As shown in Fig. 15, the electrode welding end 6b is rapidly catapulted in the arc-preventing catapult 4 due to elastic stresses of the first compression springs 3a on the movable electrode slice 6a; meanwhile the arc-preventing catapult 4 is rapidly catapulted in a direction away from the front electrode 51 due to an elastic stress of the second compression spring 3b. As a result, the remote signaling alarm module 20 is misaligned with the remote signaling gap 16, and the indication module 10 is moved to the second end 1d and blocked to be stationary, thus realizing a mechanical indication for invalidation, a sufficiently large dielectric strength is formed between the through hole 4a and the electrode welding end 6b and between the front electrode 51 and the through hole 4a, and the tripping electrode 6 and the front electrode 51 are completely isolated from each other.

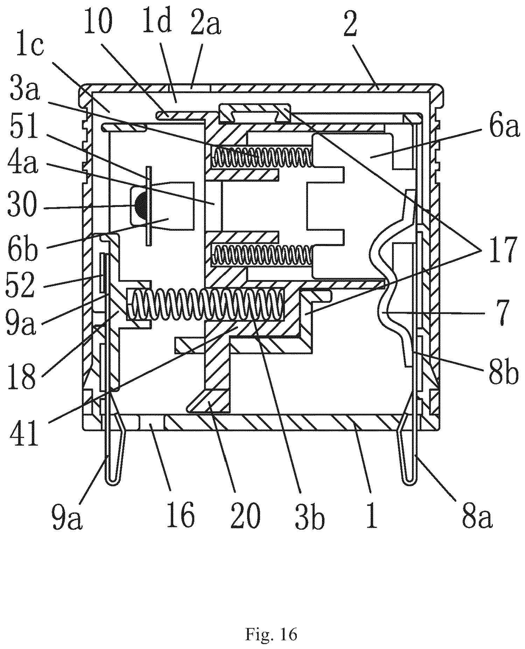

According to another embodiment of the present invention, when an instantaneous surge overvoltage, an overcurrent, a short circuit current or an overload current through the tripping electrode 6 exceeds a preset threshold value, the breaking section 6c of the tripping electrode 6 instantaneously melts and vaporizes so that movable electrode slice 6a separates from the electrode welding end 6b. Referring to Fig. 16, the movable electrode slice 6a and the arc-preventing catapult 4 are simultaneously catapulted in a direction away from the front electrode 51 due to the elastic stresses of the first compression springs 3a and the second first compression spring 3b. At last, the remote signaling alarm module 20 is misaligned with the remote signaling gap 16, and the indication module 10 is moved to the second end Id and blocked to be stationary, thus realizing a mechanical indication for invalidation, a sufficiently large dielectric strength is formed between the through hole 4a and the electrode welding end 6b and between the movable electrode slice 6a and the through hole 4a, and the movable electrode slice 6a and the front electrode 51 are completely isolated from each other.

Preferably, the outer surface of the indication module 10 can be coated with a bold color, such as red color. When the indication module 10 is moved from the first end 1c to the second end Id, color change can be observed from the indication window 2a, thereby indicating protection failure of the varisto 5; meanwhile, if a user utilizes the remote signaling alarm module 20 to trigger a switch passing through the remote signaling gap 16 on the assembling platform. When the remote signal alarm module 20 that originally blocked the remote signal gap 16 and compressed a button of the switch is misaligned with the remote signaling gap 16, the button of the switch isn't compressed any longer, and the switch state of the switch changes immediately, thereby sending out a remote signal for indicating validation of the surge protection device.

### Embodiment 5

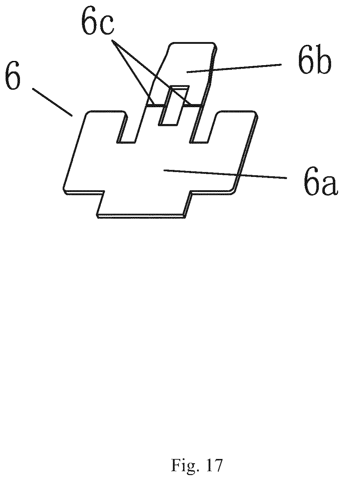

As shown in Fig. 17, it is an alternative example to the tripping electrode. The movable electrode slice 6a, the electrode welding end 6b, and the breaking section 6c are different portions of the same alloy. To limit the cross-sectional area of the breaking section 6c to ensure that it can be cut off at the breaking section 6c when an instantaneous surge overvoltage, an overcurrent, a short circuit current or overloading current through the tripping electrode 6 exceeds its threshold value, the breaking section is designed as indentation shape, and a notch is formed on a copper piece near the breaking section 6c to limit the length of the breaking section 6c.

The features or combinations of features described in the above embodiments may be present separately or may be combined with features or combinations of features in other embodiments. According to instantaneous catapult to separate and conceal the tripping electrode and adopting the metal material to realize breaking function of the short circuit overload current in the present disclosure, those skilled in the art can made various modifications or changes to the above embodiments, which are all within the scope of protection of the present invention as defined in the appended claims.

## Claims

1. An arc-preventing fast-breaking surge protection device, wherein the device comprises:
an arc-preventing assembly comprising an arc-preventing catapult (4) and an elastic element (3);
a voltage sensitive assembly comprising at least one voltage sensitive element (5);
a response switch assembly comprising a thermosensitive element (30), a front electrode (51) and a tripping electrode (6), the tripping electrode (6) being consisted of a movable electrode slice (6a), an electrode welding end (6b) and a breaking section (6c), the breaking section (6c) being respectively electrically connected to the movable electrode slice (6a) and to the electrode welding end (6b);
electrode pins comprising a flexible conductor (7), a first electrode pin (8) and a second electrode pin (9); and
a housing comprising an inner shell (1) and an outer cover (2);
wherein the response switch assembly is a normally closed switch in a normal operating state, the thermal element (30) is electrically connected in series and tightly thermally coupled with the voltage sensitive assembly; when the thermosensitive element (30) melts as the thermosensitive element reaches a preset melting temperature, the tripping electrode (6) is separated from the front electrode (51) due to an elastic stress of the elastic element (3), the tripping electrode (6) is rapidly catapulted and concealed in the arc-preventing catapult (4), meanwhile the arc-preventing catapult (4) is rapidly catapulted in a direction away from the front electrode (51) due to an elastic stress of the elastic member (3), thereby preventing arc generated during instantaneous catapulting of the tripping electrode (6) from forming an electrical breakdown and causing a short circuit and an overload;
wherein when an instantaneous surge overvoltage, an overcurrent, a short circuit current or an overloading current through the breaking section (6c) exceeds a preset threshold value, the breaking section (6c) instantaneously melts and vaporizes so that the movable electrode slice (6a) separates from the electrode welding end (6b), while the arc-preventing catapult (4) and the movable electrode slice (6a) are rapidly catapulted in a direction away from the front electrode (51) due to the elastic stress of the elastic element (3), the movable electrode slice (6a) is concealed in the arc-preventing catapult (4), thus preventing arc generated during instantaneous melting and catapulting from forming an electrical breakdown and causing a short circuit and an overload.

2. The arc-preventing fast-breaking surge protection device according to claim 1, wherein a first cavity (1a) and a second cavity (1b) are formed when the inner shell (1) is engaged with the outer cover (2), the arc-preventing assembly and the response switch assembly is arranged in the first cavity (1a), the voltage sensitive element (5) is arranged in the second cavity (1b);
wherein two metal electrode slices are respectively disposed on both sides of the voltage sensitive element (5), the front electrode (51) is disposed on one of the metal electrode slices, the front electrode (51) protrudes from the second cavity (1b) to the first cavity (1a), the other metal electrode slice is provided with a back electrode (52), the back electrode is in the second cavity (1b);
wherein the elastic element (3) consists of a first elastic member (3a) and a second elastic member (3b), the first elastic member (3a) is disposed on the arc-preventing catapult (4), the second elastic member (3b) is disposed in the first cavity (1a); wherein the first cavity (1a) is provided with an inserting groove (14), and the second cavity (1b) is provided with a blocking groove (15); the first electrode pin (8) enters the first cavity (1a) through the inserting groove (14), and the second electrode pin (9) enters the second cavity (1b) through the blocking groove (15); two ends of the flexible conductor (7) are respectively electrically connected to the movable electrode slice (6a) and an inner end (8b) of the first electrode pin (8) by metal alloy soldering or spot welding, the back electrode (52) is electrically connected to an inner end (9b) of the second electrode pin (9) by metal alloy soldering; an outer end (8a) of the first electrode pin (8) and an outer end (9a) of the second electrode pin (9) extends out of the inner shell (1) to form external connection pins.

3. The arc-preventing fast-breaking surge protection device according to claim 2, wherein the front electrode (51) is provided with a slotted hole (51a); the tripping electrode (6) is concealed in the arc-preventing catapult (4), the movable electrode slice (6a) of the tripping electrode (6) is misaligned by the first elastic member (3a); the movable electrode slice (4) thereon is misaligned by the second elastic member (3b).

4. The arc-preventing fast-breaking surge protection device according to claim 3, wherein a front end of the arc-preventing catapult (4) is provided with a through hole (4a) which is a port out of which the electrode welding end (6b) protrudes; when the arc-preventing catapult (4) contacts with the front electrode in the first cavity (1a), the through hole (4a) faces the position of the slotted hole (51a); the arc-preventing catapult (4) is provided with an exhaust vent (4b), when the tripping electrode (6) is disposed in the arc-preventing catapult (4) and the electrode welding end (6b) protrudes out of the through hole (4a), the breaking section (6c) faces the position of the exhaust vent (4b).

5. The arc-preventing fast-breaking surge protection device according to claim 4, wherein the electrode welding end (6b) protruding out of the through hole (4a) and the slotted hole (51a) is electrically connected to the front electrode (51) through the thermosensitive element (30) by soldering.

6. The arc-preventing fast-breaking surge protection device according to claim 5, wherein when the electrode welding end (6b) separates from the front electrode (51) due to thermal melting of the thermosensitive element (30) reaching the preset melting temperature, the tripping electrode (6) is catapulted back and concealed in the arc-preventing catapult (4) due to an elastic stress of the first elastic member (3a), while the arc-preventing catapult (4) is catapulted in a direction away from the front electrode (51) due to an elastic stress of the second elastic member (3b).

7. The arc-preventing fast-breaking surge protection device according to claim 5, wherein when the instantaneous surge overvoltage, the overcurrent, the short circuit current or the overloading current through the tripping electrode (6) exceeds the preset threshold value, the breaking section (6c) of the tripping electrode (6) instantaneously melts and vaporizes so that the movable electrode slice (6a) separates from the electrode welding end (6b), while the movable electrode slice (6a) is rapidly catapulted in a direction away from the electrode welding end (6b) due to an elastic stress of the first elastic member (3a), the arc-preventing catapult (4) is rapidly catapulted in a direction away from the front electrode (51) due to an elastic stress of the second elastic member (3b), the movable electrode slice (6a) is concealed in the arc-preventing catapult (4).

8. The arc-preventing fast-breaking surge protection device according to claim 6 or claim 7, wherein the arc-preventing fast-breaking surge protection device further comprises an indication module (10) for indicating a state of the arc-preventing fast-breaking surge protection device and a remote signaling alarm module (20) for indicating a state of the arc-preventing fast-breaking surge protection device; wherein the indication module (10) is an electrical indication module or a mechanical indication module;
wherein the outer cover (2) is provided with an indication window (2a).

9. The arc-preventing fast-breaking surge protection device according to any one of claims 1-8, wherein the thermosensitive element (30) is a fusible metal alloy solder or a conductive polymer;
wherein the breaking section (6c) is a metal alloy material which is vaporized instantaneously after melting.

10. The arc-preventing fast-breaking surge protection device according to claim any one of claims 1-9, wherein the voltage sensitive element (5) adopts a varistor sensitive element, a discharge tubular sensitive element, or a discharge gap sensitive element.

## Patentansprüche

1. Eine lichtbogenverhindernde schnellbrechende Überspannungsschutzvorrichtung, wobei die Vorrichtung umfasst:
eine lichtbogenverhindernde Baugruppe, umfassend ein lichtbogenverhinderndes Katapult (4) und ein elastisches Element (3);
eine spannungsempfindliche Baugruppe, umfassend mindestens ein spannungsempfindliches Element (5);
eine Antwortschalter-Baugruppe, umfassend ein temperaturempfindliches Element (30), eine vordere Elektrode (51) und eine Auslöseelektrode (6) bestehend aus einem beweglichen Elektrodenstück (6a), einem Elektrodenschweißende (6b) und einem Bruchabschnitt (6c), wobei der Bruchabschnitt (6c) jeweils elektrisch mit dem beweglichen Elektrodenstück (6a) und dem Elektrodenschweißende (6b) verbunden ist;
Elektrodenstifte, umfassend einen flexiblen Leiter (7), einen ersten Elektrodenstift (8) und einen zweiten Elektrodenstift (9); und
ein Gehäuse, umfassend eine Innenschale (1) und eine Außenhülle (2);
wobei die Antwortschalter-Baugruppe ein normal geschlossener Schalter in einem normalen Betriebszustand ist, wobei das Thermoelement (30) mit dem spannungsempfindlichen Element elektrisch in Reihe verbunden und fest thermisch gekoppelt ist; wenn das temperaturempfindliche Element (30) bei Erreichen einer vorbestimmten Schmelztemperatur des temperaturempfindlichen Elements schmilzt, wird die Auslöseelektrode (6) aufgrund einer elastischen Spannung des elastischen Elements (3) von der vorderen Elektrode (51) getrennt, wobei die Auslöseelektrode (6) schnell katapultiert und in dem lichtbogenverhindernden Katapult (4) versenkt wird, währenddessen das lichtbogenverhindernde Katapult (4) durch eine elastische Spannung des elastischen Elements (3) schnell in eine Richtung weg von der vorderen Elektrode (51) katapultiert wird, wodurch verhindert wird, dass ein beim augenblicklichen Katapultieren der Auslöseelektrode (6) erzeugter Lichtbogen einen elektrischen Durchschlag bildet und einen Kurzschluss und eine Überlastung verursacht;
wobei wenn eine augenblickliche Überspannung, ein Überstrom, ein Kurzschlussstrom oder ein Überlaststrom durch den Bruchabschnitt (6c) einen vorbestimmten Schwellenwert übersteigt, der Bruchabschnitt (6c) augenblicklich schmilzt und verdampft, so dass sich das bewegliche Elektrodenstück (6a) von dem Elektrodenschweißende (6b) trennt, während das lichtbogenverhindernde Katapult (4) und das bewegliche Elektrodenstück (6a) durch die elastische Spannung des elastischen Elements (3) schnell in eine Richtung weg von der vorderen Elektrode (51) katapultiert werden, wobei das bewegliche Elektrodenstück (6a) in dem lichtbogenverhindernden Katapult (4) versenkt wird, wodurch verhindert wird, dass ein beim augenblicklichen Schmelzen und Katapultieren erzeugter Lichtbogen einen elektrischen Durchschlag bildet und einen Kurzschluss und eine Überlastung verursacht.

2. Die lichtbogenverhindernde schnellbrechende Überspannungsschutzvorrichtung nach Anspruch 1, wobei eine erste Kavität (1a) und eine zweite Kavität (1b) gebildet sind, wenn die Innenschale (1) mit der Außenhülle (2) in Eingriff ist, wobei die lichtbogenverhindernde Baugruppe und die Antwortschalter-Baugruppe in der ersten Kavität (1a) angeordnet sind, und das spannungsempfindliche Element (5) in der zweiten Kavität (1b) angeordnet ist;
wobei zwei Metallelektrodenstücke jeweils auf beiden Seiten des spannungsempfindlichen Elements (5) angeordnet sind, wobei die vordere Elektrode (51) auf einem der Metallelektrodenstücke angeordnet ist, und die vordere Elektrode (51) von der zweiten Kavität (1b) in die erste Kavität (1a) ragt, wobei das andere Metallelektrodenstück mit einer hinteren Elektrode (52) bereitgestellt ist, wobei die hintere Elektrode in der zweiten Kavität (1b) ist;
wobei das elastische Element (3) aus einem ersten elastischen Bauteil (3a) und einem zweiten elastischen Bauteil (3b) besteht, wobei das erste elastische Bauteil (3a) auf dem lichtbogenverhindernden Katapult (4) angeordnet ist, und das zweite elastische Bauteil (3b) in der ersten Kavität (1a) angeordnet ist;
wobei die erste Kavität (1a) mit einer Einführnut (14) bereitgestellt ist, und die zweite Kavität (1b) ist mit einer Sperrnut (15) bereitgestellt; wobei der erste Elektrodenstift (8) durch die Einführnut (14) in die erste Kavität (1a) eintritt, und der zweite Elektrodenstift (9) durch die Sperrnut (15) in die zweite Kavität (1b) eintritt; wobei zwei Enden des flexiblen Leiters (7) jeweils elektrisch mit dem beweglichen Elektrodenstück (6a) und einem inneren Ende (8b) des ersten Elektrodenstiftes (8) durch Metalllegierungslöten oder Punktschweißen verbunden sind, wobei die hintere Elektrode (52) elektrisch mit einem inneren Ende (9b) des zweiten Elektrodenstiftes (9) durch Metalllegierungslöten verbunden ist; wobei sich ein äußeres Ende (8a) des ersten Elektrodenstiftes (8) und ein äußeres Ende (9a) des zweiten Elektrodenstiftes (9) aus der Innenschale (1) heraus erstrecken, um externe Verbindungsstifte zu bilden.

3. Die lichtbogenverhindernde schnellbrechende Überspannungsschutzvorrichtung nach Anspruch 2, wobei die vordere Elektrode (51) mit einem Langloch (51a) bereitgestellt ist; die Auslöseelektrode (6) ist in dem lichtbogenverhindernden Katapult (4) versenkt, wobei das bewegliche Elektrodenstück (6a) der Auslöseelektrode (6) durch das erste elastische Bauteil (3a) verstellt ist; das bewegliche Elektrodenstück (6a) ist darauf durch das zweite elastische Bauteil (3b) verstellt.

4. Die lichtbogenverhindernde schnellbrechende Überspannungsschutzvorrichtung nach Anspruch 3, wobei ein vorderes Ende des lichtbogenverhindernden Katapults (4) mit einem Durchgangsloch (4a) bereitgestellt ist, das eine Öffnung ist, aus der das Elektrodenschweißende (6b) herausragt; wenn das lichtbogenverhindernde Katapult (4) die vordere Elektrode in der ersten Kavität (1a) kontaktiert, ist das Durchgangsloch (4a) der Position des Langlochs (51a) zugewandt; wobei das lichtbogenverhindernde Katapult (4) mit einer Abluftöffnung (4b) bereitgestellt ist, wenn die Auslöseelektrode (6) in dem lichtbogenverhindernden Katapult (4) angeordnet ist und das Elektrodenschweißende (6b) aus dem Durchgangsloch (4a) herausragt, ist der Bruchabschnitt (6c) der Position der Abluftöffnung (4b) zugewandt.

5. Die lichtbogenverhindernde schnellbrechende Überspannungsschutzvorrichtung nach Anspruch 4, wobei das aus dem Durchgangsloch (4a) und dem Langloch (51a) herausragende Elektrodenschweißende (6b) elektrisch mit der vorderen Elektrode (51) durch das temperaturempfindliche Element (30) mittels Löten verbunden ist.

6. Die lichtbogenverhindernde schnellbrechende Überspannungsschutzvorrichtung nach Anspruch 5, wobei wenn sich das Elektrodenschweißende (6b) von der vorderen Elektrode (51) aufgrund von thermischem Schmelzen des temperaturempfindlichen Elements (30), das die vorbestimmte Schmelztemperatur erreicht, trennt, wird die Auslöseelektrode (6) aufgrund einer elastischen Spannung des ersten elastischen Bauteils (3a) zurückkatapultiert und in dem lichtbogenverhindernden Katapult (4) versenkt, während das lichtbogenverhindernde Katapult (4) aufgrund einer elastischen Spannung des zweiten elastischen Bauteils (3b) in eine Richtung weg von der vorderen Elektrode (51) katapultiert wird.

7. Die lichtbogenverhindernde schnellbrechende Überspannungsschutzvorrichtung nach Anspruch 5, wobei wenn die augenblickliche Überspannung , der Überstrom, der Kurzschlussstrom oder der Überlaststrom durch die Auslöseelektrode (6) den vorbestimmten Schwellenwert übersteigt, der Bruchabschnitt (6c) der Auslöseelektrode (6) augenblicklich schmilzt und verdampft, so dass sich das bewegliche Elektrodenstück (6a) von dem Elektrodenschweißende (6b) trennt, während das bewegliche Elektrodenstück (6a) durch eine elastische Spannung des ersten elastischen Bauteils (3a) schnell in eine Richtung weg von dem elektrodenschweißende (6b) katapultiert wird, wobei das lichtbogenverhindernde Katapult (4) aufgrund einer elastischen Spannung des zweiten elastischen Bauteils (3b) schnell in eine Richtung weg von der vorderen Elektrode (51) katapultiert wird, wobei das bewegliche Elektrodenstück (6a) in dem lichtbogenverhindernden Katapult (4) versenkt wird.

8. Die lichtbogenverhindernde schnellbrechende Überspannungsschutzvorrichtung nach Anspruch 6 oder 7, wobei die lichtbogenverhindernde schnellbrechende Überspannungsschutzvorrichtung weiter umfasst, ein Indikationsmodul (10) zum Anzeigen eines Zustandes der lichtbogenverhindernden schnellbrechenden Überspannungsschutzvorrichtung und ein Fernmelde-Alarmmodul (20) zum Anzeigen eines Zustandes der lichtbogenverhindernden schnellbrechenden Überspannungsschutzvorrichtung;
wobei das Indikationsmodul (10) ein elektrisches Indikationsmodul oder ein mechanisches Indikationsmodul ist;
wobei die Außenhülle (2) mit einem Indikationsfenster (2a) bereitgestellt ist.

9. Die lichtbogenverhindernde schnellbrechende Überspannungsschutzvorrichtung nach einem der Ansprüche 1-8, wobei das temperaturempfindliche Element (30) ein schmelzbares Lot aus einer Metalllegierung oder ein leitfähiges Polymer ist;
wobei der Bruchabschnitt (6c) ein Metalllegierungsmaterial ist, das nach dem Schmelzen augenblicklich verdampft wird.

10. Die lichtbogenverhindernde schnellbrechende Überspannungsschutzvorrichtung nach einem der Ansprüche 1-9, wobei das spannungsempfindliche Element (5) ein Varistor-empfindliches Element, ein Entladungsröhren-empfindliches Element, oder ein Entladungsspalt-empfindliches Element annimmt.

## Revendications

1. Dispositif de protection contre les surtensions à coupure rapide empêchant l'arc, dans lequel le dispositif comprend :
un ensemble empêchant l'arc comprenant une catapulte empêchant l'arc (4) et un élément élastique (3) ;
un ensemble sensible à la tension comprenant au moins un élément sensible à la tension (5) ;
un ensemble commutateur de réponse comprenant un élément thermosensible (30), une électrode avant (51) et une électrode de déclenchement (6), l'électrode de déclenchement (6) consistant en une tranche d'électrode déplaçable (6a), une extrémité de soudage d'électrode (6b) et une section de coupure (6c), la section de coupure (6c) étant respectivement connectée électriquement à la tranche d'électrode déplaçable (6a) et à l'extrémité de soudage d'électrode (6b) ;
des broches d'électrode comprenant un conducteur souple (7), une première broche d'électrode (8) et une seconde broche d'électrode (9) ; et
un boîtier comprenant une enveloppe interne (1) et un couvercle externe (2) ;
dans lequel l'ensemble commutateur de réponse est un commutateur normalement fermé dans un état de fonctionnement normal, l'élément thermique (30) est connecté électriquement en série et étroitement couplé thermiquement à l'ensemble sensible à la tension ; lorsque l'élément thermosensible (30) fond lorsque l'élément thermosensible atteint une température de fusion prédéfinie, l'électrode de déclenchement (6) est séparée de l'électrode avant (51) en raison d'une contrainte élastique de l'élément élastique (3), l'électrode de déclenchement (6) est rapidement catapultée et dissimulée dans la catapulte empêchant l'arc (4), pendant ce temps la catapulte empêchant l'arc (4) est rapidement catapultée dans une direction à l'opposé de l'électrode avant (51) en raison d'une contrainte élastique de l'élément élastique (3), empêchant ainsi l'arc généré pendant le catapultage instantané de l'électrode de déclenchement (6) à partir de la formation d'un claquage électrique et provoquant un court-circuit et une surcharge ;
dans lequel, lorsqu'une surtension instantanée, un surcourant, un courant de court-circuit ou un courant de surcharge à travers la section de coupure (6c) dépasse une valeur de seuil prédéfinie, la section de coupure (6c) fond et s'évapore instantanément de telle sorte que la tranche d'électrode déplaçable (6a) se sépare de l'extrémité de soudage d'électrode (6b), tandis que la catapulte empêchant l'arc (4) et la tranche d'électrode déplaçable (6a) sont rapidement catapultées dans une direction à l'opposé de l'électrode avant (51) en raison de la contrainte élastique de l'élément élastique (3), la tranche d'électrode déplaçable (6a) est dissimulée dans la catapulte empêchant l'arc (4), empêchant ainsi l'arc généré pendant la fusion instantanée et le catapultage à partir de la formation d'un claquage électrique et provoquant un court-circuit et une surcharge.

2. Dispositif de protection contre les surtensions à coupure rapide empêchant l'arc selon la revendication 1, dans lequel une première cavité (1a) et une seconde cavité (1b) sont formées lorsque l'enveloppe interne (1) est en prise avec le couvercle externe (2), l'ensemble empêchant l'arc et l'ensemble commutateur de réponse sont agencés dans la première cavité (1a), l'élément sensible à la tension (5) est agencé dans la seconde cavité (1b) ;
dans lequel deux tranches d'électrode métalliques sont respectivement disposées sur les deux côtés de l'élément sensible à la tension (5), l'électrode avant (51) est disposée sur l'une des tranches d'électrode métalliques, l'électrode avant (51) fait saillie à partir de la seconde cavité (1b) vers la première cavité (1a), l'autre tranche d'électrode métallique comporte une électrode arrière (52), l'électrode arrière est dans la seconde cavité (1b) ;
dans lequel l'élément élastique (3) consiste en un premier élément élastique (3a) et un second élément élastique (3b), le premier élément élastique (3a) est disposé sur la catapulte empêchant l'arc (4), le second élément élastique (3b) est disposé dans la première cavité (1a) ;
dans lequel la première cavité (1a) comporte une rainure d'introduction (14), et la seconde cavité (1b) comporte une rainure de blocage (15) ; la première broche d'électrode (8) entre dans la première cavité (1a) par l'intermédiaire de la rainure d'introduction (14), et la seconde broche d'électrode (9) entre dans la seconde cavité (1b) par l'intermédiaire de la rainure de blocage (15) ; deux extrémités du conducteur souple (7) sont respectivement connectées électriquement à la tranche d'électrode déplaçable (6a) et à une extrémité interne (8b) de la première broche d'électrode (8) par brasage d'alliage métallique ou soudage par points, l'électrode arrière (52) est connectée électriquement à une extrémité interne (9b) de la seconde broche d'électrode (9) par brasage d'alliage métallique ; une extrémité externe (8a) de la première broche d'électrode (8) et une extrémité externe (9a) de la seconde broche d'électrode (9) s'étendent hors de l'enveloppe interne (1) pour former des broches de connexion externes.

3. Dispositif de protection contre les surtensions à coupure rapide empêchant l'arc selon la revendication 2, dans lequel l'électrode avant (51) comporte un trou à fente (51a) ; l'électrode de déclenchement (6) est dissimulée dans la catapulte empêchant l'arc (4), la tranche d'électrode déplaçable (6a) de l'électrode de déclenchement (6) est décalée par le premier élément élastique (3a) ; la tranche d'électrode déplaçable (4) sur celle-ci est décalée par le second élément élastique (3b).

4. Dispositif de protection contre les surtensions à coupure rapide empêchant l'arc selon la revendication 3, dans lequel une extrémité avant de la catapulte empêchant l'arc (4) comporte un trou traversant (4a) qui est un orifice hors duquel l'extrémité de soudage d'électrode (6b) fait saillie ; lorsque la catapulte empêchant l'arc (4) vient en contact avec l'électrode avant dans la première cavité (1a), le trou traversant (4a) est tourné vers la position du trou à fente (51a) ; la catapulte empêchant l'arc (4) comporte un évent d'échappement (4b), lorsque l'électrode de déclenchement (6) est disposée dans la catapulte empêchant l'arc (4) et que l'extrémité de soudage d'électrode (6b) fait saillie hors du trou traversant (4a), la section de coupure (6c) est tournée vers la position de l'évent d'échappement (4b).

5. Dispositif de protection contre les surtensions à coupure rapide empêchant l'arc selon la revendication 4, dans lequel l'extrémité de soudage d'électrode (6b) faisant saillie hors du trou traversant (4a) et du trou à fente (51a) est connectée électriquement à l'électrode avant (51) par l'intermédiaire de l'élément thermosensible (30) par brasage.

6. Dispositif de protection contre les surtensions à coupure rapide empêchant l'arc selon la revendication 5, dans lequel, lorsque l'extrémité de soudage d'électrode (6b) se sépare de l'électrode avant (51) en raison de la fusion thermique de l'élément thermosensible (30) atteignant la température de fusion prédéfinie, l'électrode de déclenchement (6) est catapultée en arrière et dissimulée dans la catapulte empêchant l'arc (4) en raison d'une contrainte élastique du premier élément élastique (3a), tandis que la catapulte empêchant l'arc (4) est catapultée dans une direction à l'opposé de l'électrode avant (51) en raison d'une contrainte élastique du second élément élastique (3b).

7. Dispositif de protection contre les surtensions à coupure rapide empêchant l'arc selon la revendication 5, dans lequel, lorsque la surtension instantanée, le surcourant, le courant de court-circuit ou le courant de surcharge à travers l'électrode de déclenchement (6) dépasse la valeur de seuil prédéfinie, la section de coupure (6c) de l'électrode de déclenchement (6) fond et s'évapore instantanément de telle sorte que la tranche d'électrode déplaçable (6a) se sépare de l'extrémité de soudage d'électrode (6b), tandis que la tranche d'électrode déplaçable (6a) est rapidement catapultée dans une direction à l'opposé de l'extrémité de soudage d'électrode (6b) en raison d'une contrainte élastique du premier élément élastique (3a), la catapulte empêchant l'arc (4) est rapidement catapultée dans une direction à l'opposé de l'électrode avant (51) en raison d'une contrainte élastique du second élément élastique (3b), la tranche d'électrode déplaçable (6a) est dissimulée dans la catapulte empêchant l'arc (4).

8. Dispositif de protection contre les surtensions à coupure rapide empêchant l'arc selon la revendication 6 ou 7, dans lequel le dispositif de protection contre les surtensions à coupure rapide empêchant l'arc comprend en outre un module d'indication (10) pour indiquer un état du dispositif de protection contre les surtensions à coupure rapide empêchant l'arc et un module d'alarme de signalisation à distance (20) pour indiquer un état du dispositif de protection contre les surtensions à coupure rapide empêchant l'arc ;
dans lequel le module d'indication (10) est un module d'indication électrique ou un module d'indication mécanique ;
dans lequel le couvercle externe (2) comporte une fenêtre d'indication (2a).

9. Dispositif de protection contre les surtensions à coupure rapide empêchant l'arc selon l'une quelconque des revendications 1 à 8, dans lequel l'élément thermosensible (30) est une brasure d'alliage métallique fusible ou un polymère conducteur ;
dans lequel la section de coupure (6c) est un matériau d'alliage métallique qui est évaporé instantanément après fusion.

10. Dispositif de protection contre les surtensions à coupure rapide empêchant l'arc selon l'une quelconque des revendications 1 à 9, dans lequel l'élément sensible à la tension (5) utilise un élément sensible à varistance, un élément sensible tubulaire à décharge ou un élément sensible à espace à décharge.
